Europäisches Patentamt

European Patent Office

Office européen des brevets

(19)

(11)  EP 0 833 079 A2

(12)  # EUROPEAN PATENT APPLICATION

(43) Date of publication:
01.04.1998 Bulletin 1998/14

(51) Int Cl.$^6$: F16H 47/08, F16D 33/04

(21) Application number: 97307602.9

(22) Date of filing: 26.09.1997

(84) Designated Contracting States:
AT BE CH DE DK ES FI FR GB GR IE IT LI LU MC NL PT SE
Designated Extension States:
AL LT LV RO SI

(30) Priority: 26.09.1996 GB 9620063

(71) Applicant: Haidar, Haidar Mohammed
Perth, PH2 ODB (GB)

(72) Inventor: Haidar, Haidar Mohammed
Perth, PH2 ODB (GB)

(74) Representative: Pattullo, Norman et al
Murgitroyd and Company
373 Scotland Street
Glasgow G5 8QA (GB)

(54)  **Transmission assembly**

(57)  A transmission assembly (10) which has means (28) for controlling the flow and velocity of a fluid medium, wherein the power or torque transferred by the fluid medium is varied by the position of the control means (28).

Fig. 1

## Description

The present invention relates to a transmission assembly.

It is becoming commonplace in the automobile industry to replace the traditional manual gear-changing with an automatic equivalent. Such automatic transmissions usual embody a combination of hydraulic and mechanical transmission components. The hydraulic components include a torque convertor, such as a fluid coupling, whereas the mechanical components include planetary (or epicyclic) gears.

A fluid coupling typically includes an impeller or driving member, and a runner or driven member, such as a turbine. The impeller is rotationally coupled to the engine and is driven by the engine. When the impeller is driven, the fluid (such as oil) within the fluid coupling is forced outwards and impacts on the vanes of the runner causing rotation of the runner. The oil is deflected against the vanes of the runner back towards the impeller. This re-circulation of oil rotates the runner at increasing rotational speed until it is rotating at the same speed as the impeller. The recirculating oil is commonly referred to as "acting" oil. A fluid coupling, being a type of torque convertor, thus converts the low torque of the rapidly rotating impeller into a high torque on the drive shaft with a low rotational speed.

This type of coupling transmits the same torque produced by the engine, except for some losses due to "slip" because the runner is not mechanically coupled to the impeller and hence has a small degree of rotational lag. A fluid coupling thus provides a smooth transfer of torque from the engine to a drive shaft so that the vehicle moves away smoothly.

The term "slip" may be generally defined as the degree to which the rotating speed of a driven member lags behind the rotating speed of a driving member.

To provide for speed adjustment, the present invention has means for varying the flow of oil within the coupling and also the speed of the oil as it leaves the impeller. One embodiment uses planetary gears. Mechanical planetary gears conventionally comprise a centrally mounted sun gear with one or more planet gears. The planet gears engage with the sun gear and with an outer gear called the ring gear.

Using a planetary gear train, the speed of the impeller can be made indirectly proportional to the quantity of oil flowing within the coupling. As such, the smaller the amount of oil permitted to flow, the greater the speed of the impeller. Hence, the velocity of the oil as it meets the blades of the runner is controllable.

The principle of operation of the present invention is based on the basic law of kinetic energy :-

$$E = \tfrac{1}{2}\, m(V_1{}^2 - V_2{}^2)$$

where E is the energy contained within the "acting" fluid, m is the mass of the acting fluid, $V_1$ is the velocity of the acting fluid stream leaving the impeller blade and $V_2$ is the velocity of the acting fluid after it meets the blade of the runner. By controlling the two variables m and $V_1$, a variable speed control can be achieved.

"Acting" fluid is defined as the fluid (for example oil) which moves between the blades of the impeller and the blades of the runner.

According to the present invention there is provided a transmission assembly which comprises a driving member, a driven member in fluid communication with the driving member, and flow control means for controlling the flow of fluid within the assembly.

Preferably, the fluid control means comprises a valve whereby closing the valve reduces flow of acting fluid in the assembly and opening the valve increases the flow of acting fluid in the assembly.

Typically, the fluid is oil.

Alternatively, the fluid control means may comprise a stator, wherein the stator has a plurality of blades which are moveable between an open and a closed position. Preferably, the blades allow the flow of acting fluid in the assembly in the open position and restrict the flow of acting fluid in the assembly in the closed position.

Typically, the transmission assembly further includes a driving mechanism. Typically also, the driving mechanism comprises a planetary gear.

Typically, the planetary gear train includes a sun gear which is centrally mounted in the train, one or more planet gears and a ring gear at the outer periphery of the train, wherein the planet gears engage with an outer surface of the sun gear and with an inner surface of the ring gear.

Preferably, the planet gears are coupled to an input shaft from an engine. Preferably also, the driving member is coupled to the sun gear of the planetary gear train. Preferably also, the driven member is coupled to the ring gear of the planetary gear train.

Embodiments of the present invention will now be described, by way of example only, with reference to the accompanying drawings in which:-

Fig. 1 is a cross-sectional view of a transmission assembly according to the present invention, including a fluid control valve in a closed position;
Fig. 2 is a partly-sectional perspective view of a fluid control valve for use with the assembly of Fig. 1;

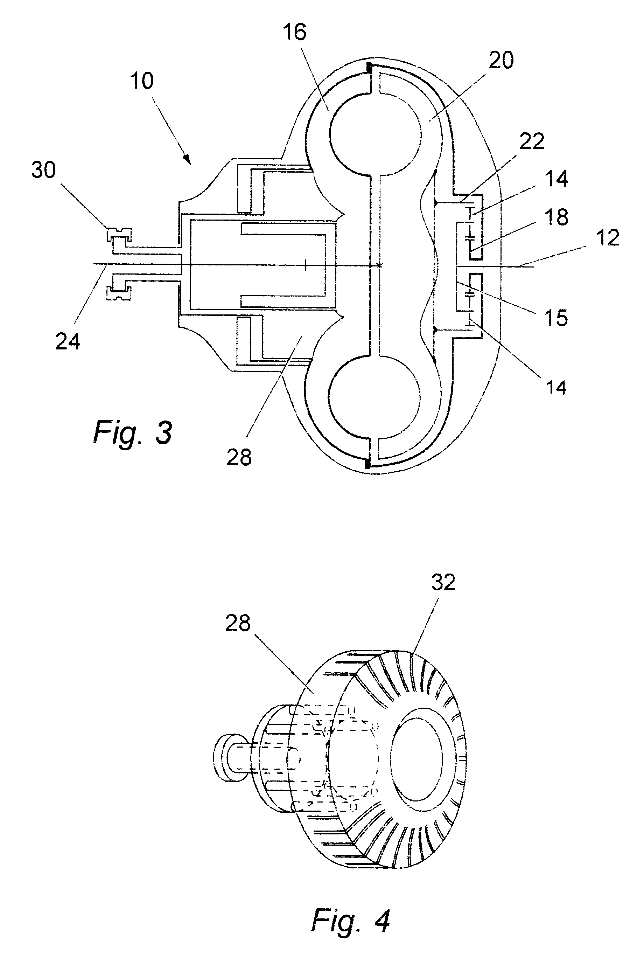

Fig. 3 is the assembly of Fig. 1 with the valve open;
Fig. 4 is a perspective view of the valve of Fig. 2;
Fig. 5 is a cross-sectional view of an alternative transmission assembly according to the present invention, using a reactor;
Fig. 6 is a partly-sectional perspective view of the reactor of Fig. 5; and
Figs 7a and 7b are side and sectional front elevations respectively of a planetary gear train.

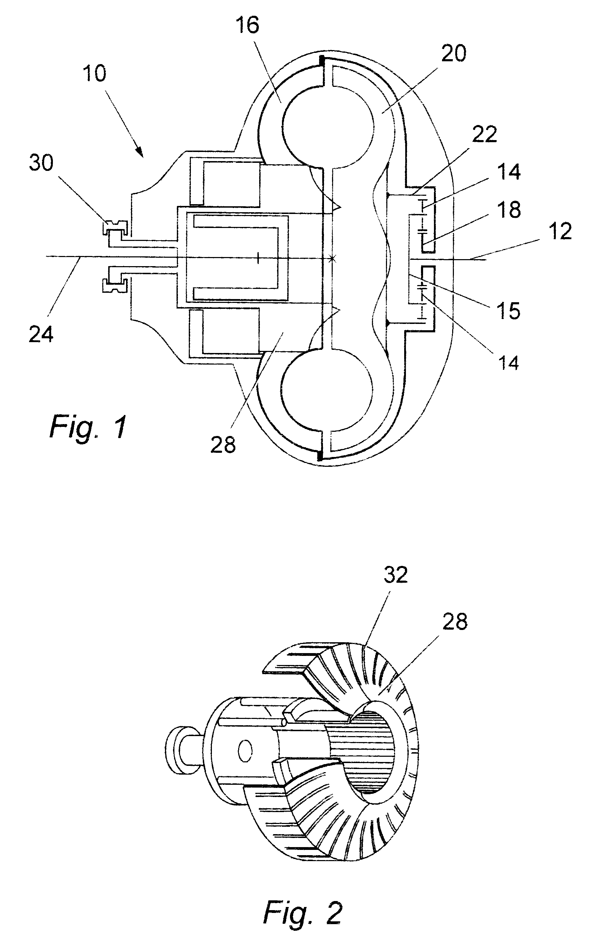

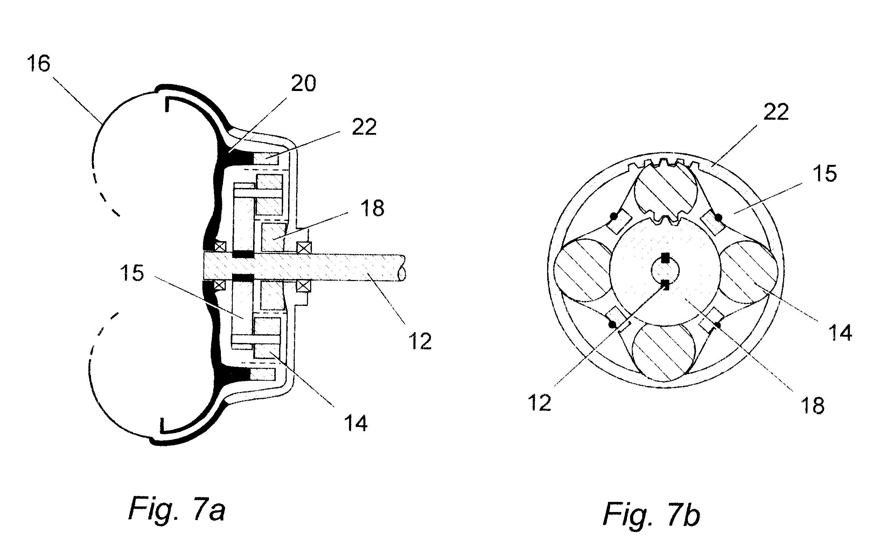

Fig. 1 shows a transmission assembly 10 which is coupled to an engine (not shown) via an input shaft 12 from the engine. The input shaft 12 is connected to a planetary gear carrier 15 which has a plurality of planetary gears 14 mounted thereon, as best shown in Figs 7a and 7b. The planetary gears 14 are independently and rotatably mounted on the planetary gear carrier 15.

A driving member or impeller 16 is coupled to sun gear 18 of the gear train and a driven member or runner 20 is coupled at a first end to ring gear 22. The runner 20 is coupled at a second end to output shaft 24 which in turn drives the wheels of the vehicle.

The use of planetary gears is common in the automobile industry, and a detailed description of the function of such will be omitted.

The first embodiment of the assembly includes a hydraulic portion (the fluid coupling) and a mechanical portion (the planetary gear train).

In operation, the input shaft 12 is rotated by the engine which in turn drives the planetary gear carrier 15 of the gear train. The planetary gears 14 rotate due to the rotation of the planetary gear carrier 15 of the gear train assembly and cause rotation of the impeller 16.

The fluid coupling works on the principle that acting oil is thrown out from the blades of the impeller 16. If the flow of acting oil is restricted, then a very small proportion of oil will be directed towards the blades of the runner 20 and hence the speed of the runner 20 and the ring gear 22 should be about zero. However, due to the engagement of the planetary gears 14 and the ring gear 22, the ring gear 22 will rotate at a slow speed, with the planet gears 14 taking up the slip as the sun gear 18 rotates at a much higher speed.

The flow of acting oil is controlled by the position of a flow control valve 28. In Fig. 1, the valve 28 is shown in the closed position. With the valve 28 closed, the flow of oil in the torque convertor is restricted. In these conditions, the impeller 16 will rotate at a speed which is between 3 and 4 times the speed of the engine input shaft 12, as there will be a reduced quantity of oil to be pumped by the impeller 16.

The planetary gears are used to permit the impeller 16 to rotate at a higher speed with respect to the runner 20. As the flow of acting oil is reduced and the impeller 16 is rotating at this higher speed, full input torque is transmitted to the output shaft 24.

Gradual opening of the valve 28 will allow acting oil to circulate in the torque convertor. As the flow of oil between the impeller 16 and the runner 20 increase, the speed of the impeller 16 will consequently decrease. The reduction in speed of the impeller 16 is due to the increased flow of acting oil towards the runner 20. Hence, the speed of the runner 20 will gradually begin to increase as the speed of the impeller 16 decreases.

In effect, the rotational speed of the impeller 16 is being lost to the runner 20 until the speed of the runner 20 approximately matches the speed of the impeller 16. This will occur when the valve 28 is fully open as shown in Fig, 3. The speed of the runner 20 cannot be exactly that of the impeller 16 due to slip.

The position of the valve 28 is controlled using a bracket 30, which is coupled to a shaft 32 of the valve 28 using, for example, a thrust bearing (not shown). The thrust bearing permits the valve 28 to rotate in synchronisation with the impeller 16 whilst allowing the bracket 30 to remain stationary.

To close the valve 28, a hydraulic piston for example could be coupled to the bracket 30 and the piston actuated to effect movement of the valve 28. The travel of the piston should be in the order of 50 to 100 mm.

Gradual retraction of the piston will open the valve 28, thereby increasing the flow of acting oil within the torque convertor and engaging the transmission.

The valve 28 is provided with a plurality of slots 32. The slots 32 allow the vanes of the impeller 16 to slide within these slots, thereby closing the valve 28 as shown in Fig. 1.

It will be appreciated that there are many alternatives to the use of a piston, such as a pulley or a lever.

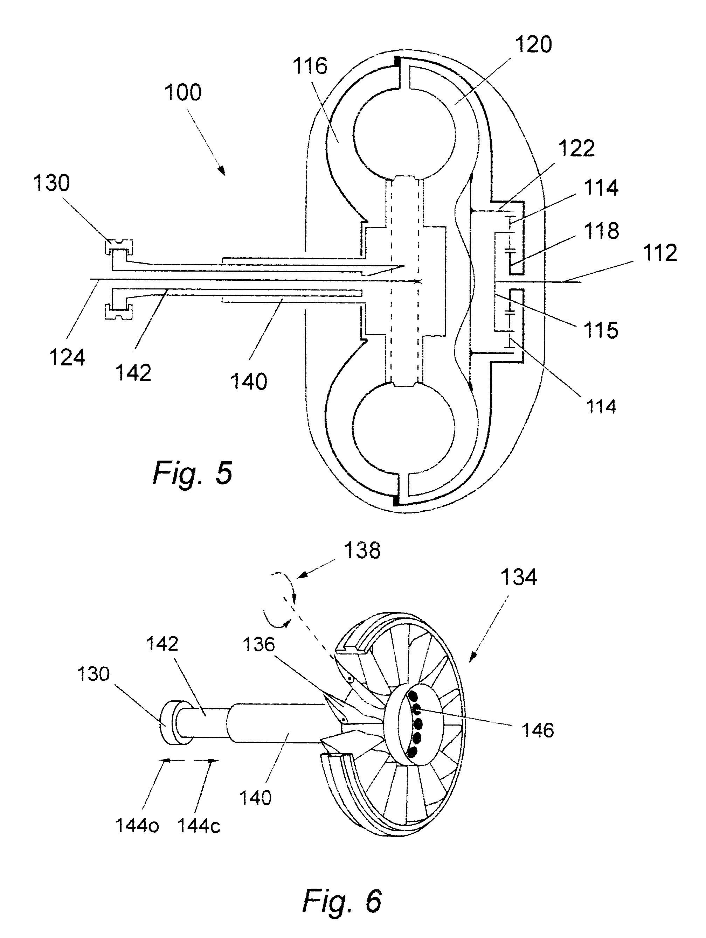

Turning now to Figs 5 and 6 there is shown an alternative transmission assembly 100. Wherever possible, similar features to the previous embodiment have been labelled using the same reference numbers prefixed with a 1.

In this embodiment, a reactor 134 is positioned between the impeller 116 and the runner 120. The reactor 134 is provided with a plurality of blades 136 which are rotatable as shown by the arrows 138.

The shaft 140 of the reactor 134 is provided with a telescopic portion 142 which slides within the shaft 140.

In operation, to restrict the flow of oil between the impeller 116 and the runner 120, the blades 136 of the wheel 134 will be turned to prevent passage of oil. In this shut-off position, the telescopic portion 142 of the shaft 140 moves towards the blades in the direction of arrow 144c. The telescopic portion 142 acts against a plurality of control gears 146 which are coupled to the blades 136, thereby controlling the position of the blades 136.

Gradual retraction of the telescopic portion in the direction of arrow 144o, changes the angle of the blades and opens then to an in-line position. When the telescopic portion 142 is fully retracted, the blades 136 will be fully open and allow the maximum quantity of oil to circulate between the impeller 116 and the runner 120.

The over-all operation of the transmission assembly 100 is the same as that for the previous embodiment and hence a detailed description will be omitted. The only difference in the assembly 100 is the use of the moveable blades 136 to control the oil flow as opposed to the use of the valve 28 in the previous embodiment.

Hence, there is provided a transmission assembly which is variable in terms of speed. By controlling the flow and the velocity of the acting oil within the transmission assembly, the transmission of torque between the impeller (which is coupled to the engine) and the runner (which is coupled to the drive shaft) is variable along a large scale. This provides a smooth power transfer.

Modifications and improvements may be made to the foregoing without departing from the scope of the present invention.

**Claims**

1. A transmission assembly comprising a driving member, a driven member in fluid communication with the driving member and flow control means for controlling the flow of acting fluid within the assembly.

2. An assembly as claimed in claim 1 wherein the fluid control means comprises a valve.

3. An assembly as claimed in claim 2 wherein closing the valve reduces the amount of acting fluid in the assembly and opening the valve increases the amount of acting fluid in the assembly.

4. An assembly as claimed in claim 1 wherein the fluid control means comprises a stator having a plurality of blades which are moveable between an open and a closed position.

5. An assembly according to claim 4 where the blades restrict the flow of fluid in the assembly in the closed position and increase the flow of fluid in the assembly in the open position.

6. An assembly according to any preceding claim wherein the fluid is oil.

7. An assembly as claimed in any preceding claim wherein the transmission assembly further includes a driving mechanism.

8. An assembly as claimed in claim 7 wherein the driving mechanism comprises a planetary gear.

9. An assembly as claimed in claim 8 wherein the planetary gear train includes a sun gear which is centrally mounted in the train, one or more planet gears and a ring gear at the outer periphery of the train, wherein the planet gears engage with an outer surface of the sun gear and with an inner surface of the ring gear.

10. An assembly as claimed in claim 9 wherein the planet gears are coupled to an input shaft from an engine, the driving member is coupled to the sun gear of the planetary gear train and the driven member is coupled to the ring gear of the planetary gear train.

11. An assembly as claimed in any preceding claim, wherein the power or torque transmitted through the apparatus can be varied by the position of the control means.

12. An assembly substantially as hereinbefore described with reference to any of the accompanying drawings.

Fig. 1

Fig. 2

Fig. 3

Fig. 4

*Fig. 5*

*Fig. 6*

Fig. 7b

Fig. 7a